**Europäisches Patentamt**

**European Patent Office**

**Office européen des brevets**

(19)

(11) Veröffentlichungsnummer : **0 218 887 B2**

(12)

# NEUE EUROPÄISCHE PATENTSCHRIFT

(45) Veröffentlichungstag der neuen Patentschrift :
**21.04.93 Patentblatt 93/16**

(51) Int. Cl.$^5$ : **B01J 13/02**

(21) Anmeldenummer : **86112218.2**

(22) Anmeldetag : **04.09.86**

(54) **Kontinuierliches Verfahren zur Herstellung von Mikrokapseln mit Wänden aus Melamin-Formaldehydkondensaten in wässriger Dispersion.**

(30) Priorität : **14.09.85 DE 3532878**

(43) Veröffentlichungstag der Anmeldung :
**22.04.87 Patentblatt 87/17**

(45) Bekanntmachung des Hinweises auf die
Patenterteilung :
**24.01.90 Patentblatt 90/04**

(45) Bekanntmachung des Hinweises auf die
Entscheidung über den Einspruch :
**21.04.93 Patentblatt 93/16**

(84) Benannte Vertragsstaaten :
**CH DE FR GB LI NL SE**

(56) Entgegenhaltungen :
**EP-A- 82 635**
**EP-A- 0 026 914**
**DE-A- 2 222 697**
**GB-A- 2 073 132**
**US-A- 3 993 831**

(73) Patentinhaber : **BASF Aktiengesellschaft**
**Carl-Bosch-Strasse 38**
**W-6700 Ludwigshafen (DE)**

(72) Erfinder : **Sliwka, Wolfgang, Dr.**
**Diemstrasse 8**
**W-6940 Weinheim (DE)**

EP 0 218 887 B2

Jouve, 18, rue Saint-Denis, 75001 PARIS

## Beschreibung

Bei der diskontinuierlichen Herstellung von Mikrokapseln, wie sie z.B. für Reaktionsdurchschreibepapiere eingesetzt werden, wird der Dispergierprozeß abgebrochen, wenn die gewünschte Kapselgröße erreicht ist. Die Kapselgröße wird dabei durch Betrachten einer stark verdünnten Probe der Reaktionsmischung unter einem Mikroskop oder objektiver - dafür aber auch zeitaufwendiger - durch Messung mit einem geeigneten optischen Gerät (z.B. mit einem Coulter-Counter) bestimmt. Da die mikroskopische Beurteilung der Teilchengröße subjektive Komponenten enthält, variieren die Kapseldurchmesser in der Regel etwas von Partie zu Partie, wodurch Unterschiede in der Intensität der Durchschrift und gegenläufig in der Reibempfindlichkeit der damit hergestellten Papiere auftreten. Man hat deshalb, aber auch wegen der höheren Raum-Zeit-Ausbeute, immer wieder versucht, Kapseln kontinuierlich herzustellen, um dadurch eine gleichmäßigere Produktion und auch eine engere Verteilung der Kapseldurchmesser zu erhalten. Die Kapseldurchmesser kann man dabei z.B. durch Messung mit geeigneten optischen Geräten einstellen und laufend kontrollieren.

So wird in der DE-A 2 333 756 ein Verfahren beschrieben, das die kontinuierliche Verkapselung mit Hilfe von z.B. Gelatine als Wandmaterial beschreibt. In der DE-A 2 909 906 wird ein anderes kontinuierliches Verfahren beschrieben, das mit Hilfe der Grenzflächenkondensation aus Polyisocyanat und Diethylendiamin und Diethylentriamin das Wandmaterial aufbaut. In der GB-A 1 148 635 wird ebenfalls ein kontinuierliches Verfahren zur Herstellung kleiner Kapseln beschrieben, bei dem die Kapselwand mittels einer Grenzflächenkondensation, die zu vernetzten Polyamiden, Polyestern, Polyharnstoffen, Polycarbonaten oder Polyurethanen führt, aufgebaut wird.

Allen diesen Verfahren ist gemeinsam, daß man zuerst einmal eine stabile Emulsion von z.B. Öltröpfchen in Wasser herstellt, deren Durchmesser dem gewünschten Mikrokapseldurchmesser entspricht, wobei der Öltröpfchendurchmesser aber noch reversibel ist, und dann erst die z.B. bei dem Gelatineverfahren schon vorgebildete flüssige Haut durch Temperaturabsenkung geliert und mit chemischen Mitteln, wie Aldehyden, irreversibel verfestigt oder, wie bei den Grenzflächenkondensaten, durch Zugabe des zweiten Monomeren, z.B. der Di- und Triamine, die Grenzflächenkondensation ausführt und die Öltröpfchengröße in Form der Mikrokapsel endgültig irreversibel festlegt.

In der EP-A 0082 635 wird ebenfalls ein kontinuierlicher Prozeß zur Herstellung von Mikrokapseln beschrieben. Die Wände der Mikrokapseln werden aus Melamin-Formaldehyd-Vorkondensaten in Gegenwart von anionischen polymeren Polyelektrolyten, die 2 Carboxylgruppen auf 4 bis 6 C-Atome in der Polymerkette enthalten, gebildet. Im einzelnen wird zuerst eine Emulsion des zu verkapselnden wasserunlöslichen, flüssigen Kernmaterials in Anwesenheit des Melamin-Formaldehyd-Vorkondensats und des anionischen, polymeren Polyelektrolyten in einer Emulsionsmühle hergestellt und dann das Melamin-Formaldehyd-Vorkondensat bei erhöhter Temperatur in einem Rohrreaktor kondensiert, wobei die Fließgeschwindigkeit, die Temperatur und die Länge des Rohrreaktors so bemessen sind, daß das Vorkondensat auskondensiert. Den Rohrreaktor, in dem kein turbulentes Fließen herrschen soll, verläßt eine Dispersion mit fertigen Mikrokapseln.

Auch bei diesem Verfahren wird zuerst nur eine Emulsion des hydrophoben Kernmaterials mit dem endgültigen Tröpfchendurchmesser hergestellt und dann erst die Kapselwand durch Polykondensation gebildet und verfestigt.

Die britische Patentanmeldung 2073132 betrifft ein Verfahren zur Herstellung von mit Flüssigkeiten gefüllten Mikrokapseln, bei dem eine dispersionsstabilisierende Spezies in einem wässrigsauren Medium durch Wechselwirkung eines MF-Vorkondensats und eines wasserlöslichen Polymeren hergestellt wird, wobei weder das MF- Vorkondensat noch das Polymer allein eine dispersionsstabilisierende Wirkung auf das Kernmaterial ausübt. Das Vorkondensat wird durch Säurekatalyse zu einem Kondensat umgesetzt, das aus der Lösung ausfällt und das Kernmaterial unter Bildung von Mikrokapseln umhüllt. Dieses Verfahren soll beispielsweise in einem langen Rohr kontinuierlich durchführbar sein.

Gegenstand der vorliegenden Erfindung ist nun ein kontinuierliches Verfahren zur Herstellung von Mikrokapseln mit Kapselwänden aus Melamin-Formaldehyd-Kondensaten in wäßriger Dispersion, ausgehend von entsprechenden wasserlöslichen Melamin-Formaldehyd-Vorkondensaten in Gegenwart von sulfon saure Gruppen enthaltenden wasserlöslichen Hochpolymeren, dadurch gekennzeichnet, daß man in einem gerührten Kontinuierlich durchströmten Reaktor mit anschließendem Dispergiergerät entweder

1) das wasserlösliche Vorkondensat, das einzukapselnde hydrophobe Material und die wäßrige Lösung des sulfon saure Gruppen enthaltenden Hochpolymeren kontinuierlich mischt,

2) in diesem Gemisch das wasserlösliche Vorkondensat bei pH 3,0 bis 6,5 bis zur beginnenden Trübung weiterkondensiert,

3) das hydrophobe Material in der entstandenen wäßrigen Dispersion kontinuierlich dispergiert, wobei die feinen Tröpfchen des hydrophoben Materials von dem aus dem Vorkondensat entstehenden wasserunlöslichen Kondensat umhüllt werden,

2

EP 0 218 887 B2

oder

1a) das wasserlösliche Vorkondensat und die wäßrige Lösung des sulfon saure Gruppen enthaltenden Hochpolymeren kontinuierlich mischt,

2a) in dem Gemisch das wasserlösliche Vorkondensat bei pH 3,0 bis 6,5 bis zur beginnenden Trübung weiterkondensiert, dann

3a) das hydrophobe Material in der entstandenen wäßrigen Dispersion kontinuierlich dispergiert, wobei die feinen Tröpfchen des hydrophoben Materials von dem aus dem Vorkondensat entstehenden wasserunlöslichen Kondensat umhüllt werden,

und dann

4) das Wandmaterial der entstandenen Mikrokapseln auskondensiert.

Das Verfahren eignet sich für die kontinuierliche Verkapselung von in Wasser unlöslichen hydrophoben Materialien, besonders hydrophoben Flüssigkeiten. Solche Flüssigkeiten sind z.B. Alkylnaphthaline, partiell hydrierte Terphenyle, aromatische Kohlenwasserstoffe, wie Xylol, Toluol oder Dodecylbenzol, aliphatische Kohlenwasserstoffe, wie Benzin oder Mineralöl, Paraffine, Chlorparaffine, Fluorkohlenwasserstoffe, natürliche Öle, wie Erdnußöl oder Sojaöl, Klebstoffe, Aromastoffe, Parfümöle, Monomere, wie Acryl- oder Methacrylsäureester, Styrol oder Wirkstoffe, z.B. Pflanzenschutzmittel. Insbesondere sind Lösungen oder Suspensionen von Farbstoffen und vor allem von Farbbildnern und Pigmenten in Kohlenwasserstoffen, wie Alkylnaphthalinen, partiell hydriertem Terphenyl, Dodecylbenzol und anderen hochsiedenden Flüssigkeiten oder deren Mischungen zu nennen.

Als Ausgangsstoffe für das Wandmaterial eignen sich Melamin-Formaldehyd-Vorkondensate und/oder deren Ether, mit einem Verhältnis von Melamin: Formaldehyd von vorzugsweise 1:3 bis 1:6. Diese Vorkondensate N-Methylolmelaminverbindungen oder deren Ether mit Alkanolen. Die für das erfindungsgemäße Verfahren verwendeten Vorkondensate sollen mit Wasser in jedem Verhältnis mischbar sein, ohne eine Trübung zu erzeugen. Durch Abkühlung auftretende Trübungen müssen sich durch Erwärmen entfernen lassen. Aus diesen Gründen sind die Ether der Methylolmelamine besonders bevorzugt. Die Herstellung der Ausgangsstoffe ist bekannt.

Als wasserlösliche Sulfonsäuregruppen tragende Polymere kommen z.B. Homo- oder Copolymerisate des Sulfoethyl(meth)acrylats, des Sulfopropyl(meth)acrylats, der Maleinimid-N-ethansulfonsäure oder 2-Acrylamido-2-methylpropansulfonsäure in Betracht. Bevorzugt sind Polymere der 2-Acrylamido-2-methylpropansulfonsäure, die sich leicht zu Polymeren mit gewünschten K-Werten polymerisieren läßt. Die Polymeren liegen in Form der freien Säure oder vorzugsweise der Alkalimetall- oder trisubstituierten Ammoniumsalze vor. Als Sulfonsäuregruppen tragende Polymere kommen außerdem Copolymere in Betracht, die aus den genannten Sulfogruppen tragenden Monomeren oder Vinylsulfonsäure und $C_1$-bis $C_3$-Alkylacrylaten, Hydroxy-$C_2$- bis $C_4$-alkylacrylaten wie Methyl-, Ethyl-, n- oder i-Propylacrylat, Hydroxypropylacrylat und/oder N-Vinylpyrrolidon aufgebaut sind. Im Falle der Acrylate beträgt deren Anteil im Copolymerisat maximal 30 Gew.%. Im Falle der Hydroxyalkylacrylate sollte deren Anteil nicht größer als 10 Gew.%, bezogen auf die Summe der Comonomeren sein. Bei Copolymerisaten mit N-Vinylpyrrolidon liegt der Anteil an Sulfonsäuregruppen tragenden Monomeren bei mindestens 5, vorzugsweise bei 30 Gew.% und darüber (bezogen auf die Summe der Comonomeren). Von den Copolymerisaten sind solche mit 2-Acrylamido-2-methyl-propansulfonsäure ($H_2C=CH-CO-NH-C(CH_3)_2-CH_2-SO_3H$) als sulfonsäuregruppentragende Comonomere bevorzugt. Die sulfonsäuregruppentragenden Homo- und Copolymerisate werden nach bekannten Verfahren hergestellt.

Die Polymeren sollen einen K-Wert nach Fikentscher von 100 bis 170 (gemessen in wäßriger Lösung) oder eine Viskosität von 200 bis 5000 mPas bei einem Schergefälle von 489 s$^{-1}$ (gemessen bei 25°C in 20 gew.%iger wäßriger Lösung bei pH 4,0 bis 7,0) aufweisen. Bevorzugt sind Polymere mit einem K-Wert von 115 bis 160, deren Viskosität 400 bis 4000 mPas beträgt.

Die Anwendungsmenge an dem wasserlöslichen, Sulfongruppen enthaltenden Polymeren liegt in der Regel zwischen 1 und 5,5, vorzugsweise zwischen 1,5 und 4,5 Gew.%, bezogen auf die wäßrige Phase.

Die optimale Menge der wasserlöslichen, Sulfogruppen enthaltenden Polymeren wird einmal vom Polymeren selbst, zum anderen von der Reaktionstemperatur, der gewünschten Mikrokapselgröße und dem Vorkondensat aus Melamin und Formaldehyd beeinflußt. Durch einfache Reihenversuche kann die optimal benötigte Menge leicht ermittelt werden. Es hat sich herausgestellt, daß die optimale Konzentration des wasserlöslichen, Sulfogruppen aufweisenden Polymeren praktisch unabhängig ist vom Verhältnis der wäßrigen kontinuierlichen Phase zur organischen, wasserunlöslichen Kernmaterialphase. Das heißt unter den einmal optimierten Bedingungen können Mikrokapseldispersionen mit variablen Gehalten an Kapseln bei praktisch gleichbleibender Qualität hergestellt werden.

Die Weiter- und Auskondensation der Vorkondensate während und nach der Kapselbildung erfolgt zweckmäßigerweise bei pH-Werten von 3,0 bis 6,5, vorzugsweise von 3,5 bis 5,5. Der pH-Wert in der wäßrigen Phase kann mit Säuren, wie Schwefelsäure, Salzsäure, Salpetersäure, Phosphorsäure, Oxalsäure oder vorzugs-

3

weise Ameisensäure oder bei saurer wäßriger Phase mit Natronlauge eingestellt werden. Der Beginn der Trübung, d.h. die Ausfällung des Melamin-Formaldehyd-Kondensates ist etwas vom Vorkondensat abhängig, so daß es für die Bildung der Mikrokapseln aus verschiedenen Vorkondensaten etwas unterschiedliche optimale pH-Werte und/oder Temperaturen gibt.

Im allgemeinen sind für das erfindungsgemäße Verfahren Temperaturen von 15 bis 100°C zweckmäßig, bevorzugt sind Temperaturen von 40 bis 90°C, um eine schnellere Mikrokapselbildung zu erreichen.

Die Weiterkondensation des Vorkondensates kann im Bereich der oben genannten pH-Werte und Temperaturen in Abwesenheit, aber auch in Anwesenheit des wasserlöslichen Sulfogruppen tragenden Hochpolymeren erfolgen. Letzteres Verfahren ist bevorzugt, da die sich aus der wäßrigen Lösung ausscheidenden Weiterkondensatteilchen, die die Trübung verursachen, dann von gleichmäßigerer Größe sind.

Das hydrophobe zu verkapselnde Material, z.B. die wasserunlösliche Flüssigkeit, kann entweder nach dem Auftreten der Trübung zugegeben werden oder bereits während der Weiterkondensation des Vorkondensates anwesend sein.

Gemäß der vorliegenden Erfindung sind Mikrokapseln verschiedener Durchmesser herstellbar. So werden die Kapseln im allgemeinen kleiner, wenn man mehr Vorkondensat und/oder hydrophiles Schutzkolloid (d.h. die sulfogruppenhaltigen Polymeren) einsetzt und/oder intensiver dispergiert und/oder die Verweilzeit in der Dispergierstufe verlängert. Größere Kapseln sind entsprechend mit den umgekehrten Maßnahmen, einzeln oder in Kombination, zu erhalten. Der Weiterkondensationsgrad des Vorkondensates ist von Einfluß auf die Kapselgröße. Liegt er im Optimum, werden unter sonst konstanten Bedingungen die kleinsten Kapseln erhalten. Im allge meinen werden Kapseln mit Durchmessern von 1 bis 200 µm, insbesondere solche von 2 bis 50 µ, hergestellt. Letztere sind z.B. bei der Herstellung von Reaktionsdurchschreibepapieren besonders vorteilhaft.

Bevorzugt eignet sich das erfindungsgemäße kontinuierliche Verfahren zur Herstellung der in der EP-B 26 914 beschriebenen Kapseln.

Verglichen mit der Darstellung in der EP-B 26 914, Seite 6, oben, gelingt es nach der vorliegenden Erfindung bei dem richtigen Weiterkondensationsgrad des Melamin-Formaldehyd-Vorkondensates mit einem Durchgang durch eine kontinuierlich arbeitende Dispergierstufe auszukommen.

Die nach dem erfindungsgemäßen Verfahren erhaltenen Kapseln können restlichen freien Formaldehyd enthalten, der bei der Weiterverarbeitung stören kann. Der Rest Formaldehyd kann durch Zugabe von z.B. 10 bis 100 Gew.%, berechnet auf das verwendete Vorkondensat, an Harnstoff und/oder Ethylenharnstoff und/oder Melamin und/oder Ammoniak und/oder Natriumbisulfit bei 20 bis 100°C und pH-Werten von 3 bis 10, gebunden werden. Vorteilhaft wird man die Entfernung unmittelbar im Anschluß an die Auskondensation (Härtung) durchführen, bei der der Formaldehyd frei wird.

Das erfindungsgemäße Verfahren soll durch die folgenden Ausführungsbeispiele weiter erläutert werden. Im folgenden beziehen sich die Teile und Prozente auf das Gewicht. Dabei sind die Prozentangaben ihrerseits auf das Gewicht der Lösung oder Dispersion bezogen. Volumenteile entsprechen Gewichtsteilen mit der Dichte 1.

Der in den Beispielen angegebene Feststoffgehalt wird durch Trocknung (4 Std. bei 105°C) bestimmt und setzt sich im wesentlichen aus den Mikrokapseln und dem wasserlöslichen Polymeren zusammen. Der Siebrückstand wurde durch Sieben der Dispersion über ein Rüttelsieb mit 40 µm-Maschenweite erhalten und feucht gewogen. Er enthält dann ca. 50 % Wasser. Die Kapseldurchmesser wurden subjektiv unter dem Mikroskop, objektiv mittels des Coulter-Counters bestimmt. Angegeben werden die Kapseldurchmesser in µm für die häufigste Teilchengröße (Zahlenmittel) und für die Teilchenfraktion mit dem größten Gesamtvolumen (Volumenmittel) sowie die Halbwertsbreite des Volumenmittels als die Kapseldurchmesser bzw. die Kapseldurchmesserdifferenz (HW), die in der differentiellen Verteilungskurve bei 50 % der Häufigkeit ausgewiesen wird.

Die Viskosität der Kapseldispersion wird als Auslaufzeit in Sekunden von 100 ml Dispersion aus dem DIN-Becher mit 4 mm-Düse angegeben. Die Viskosität der 20 %igen Lösungen der wasserlöslichen stark saure Gruppen, z.B. Sulfonsäure enthaltenden Polymeren wurde bei 25°C im Rheomat® 30 (Fa. Contraves) bei einem Schergefälle von 489 sec$^{-1}$ gemessen. Der K-Wert wurde nach Fikentscher (Cellulosechemie 13 (1932) 58 ff), 1 %ig in Wasser, bestimmt.

Die nach den Ausführungsbeispielen erhaltenen Mikrokapseln wurden in folgender Weise auf Dichtigkeit und auf Intensität der Durchschrift geprüft:

I. Prüfung auf Dichtigkeit und Intensität der Durchschrift

α) Die Mikrokapseldispersion wird mit Wasser auf 20 % verdünnt und dann mit einer Rakel (30 µm-Lackhantel) auf ein mit aktivem Clay beschichtetes Blatt (CF-Blatt) eines Reaktionsdurchschreibepapiers gestrichen und das Papier 2 Stunden an der Luft getrocknet (ca. 5 g Kapseln/m² Papierfläche).

β) 8,25 Teile der 40 %igen Kapseldispersion werden mit
11,75 Teilen Wasser,
1,30 Teilen einer 50 %igen handelsüblichen Bindemitteldispersion auf Basis eines Copolymerisates aus Styrol und Butylacrylat und
1,30 Teilen eines Celluloseschliffs als Abstandshalter
(Arbocel® 600/50 Fa. J. Rettenmaier & Söhne, 7091 Holzmühle) nacheinander unter Rühren vermischt und dann mittels einer Drahtspiralrakel von 10 bis 30 μm Spaltweite von Hand auf ein Streichrohpapier von 44 g/m² Gewicht derart aufgezogen, daß die Beschichtung 30 min nach dem Aufstreichen und Trocknen an der Luft ein Beschichtungsgewicht von ca. 7,5 g/m² ergibt.

a) Prüfung

Die nach α) auf das CF-Blatt gestrichenen Mikrokapseln geben nach dem Trocknen eine mehr oder minder geringe Anfärbung der Clay-Schicht auf dem Papier, die durch nicht eingekapselte Farbbildnerlösung verursacht wird. Man kann allen außerhalb der Mikrokapseln sitzenden Farbbildner sofort auf dem CF-Blatt in den Farbstoff überführen, wenn man das mit den Kapseln beschichtete Papier, z.B. mit Dodecylbenzol besprüht und trocknet. Die Färbung der so behandelten CF-Blätter wurde als Differenz der Reflexion des nicht besprühten Blattes in einem Reflexionsphotometer (ELREPHO®, Fa. Zeiss) gemessen und in relativen Einheiten in % angegeben, wobei die Reflexion des nicht besprühten Blattes gleich 100 gesetzt wurde. Die gemessene Färbung wird als ICF bezeichnet und in % angegeben.

b) Intensität der Durchschrift

Das nach β) beschichtete Blatt wird mit der beschichteten Seite auf ein CF-Blatt und dann darüber 2 Lagen Papier von ca. 40 g/m² gelegt. Dieser Stapel wird in eine elektrische Schreibmaschine eingespannt und mit der größten Anschlagstärke ein Feld von 4,2 x 3,4 cm mit dem Buchstaben kleines w beschrieben. Nach 30 min Lagerung wird die Intensität (ID) der erhaltenen dritten Durchschrift als Differnz der Reflexion des unbeschriebenen ($R_{yo}$) und des beschriebenen ($R_{ym}$) CF-Blattes ermittelt. Die Messung der Reflexion erfolgt mit dem unter Ia angegebenen Reflexionsphotometer mit dem Filter Y, ihre Angabe in relativen Einheiten (%): ID = $R_{yo}$ - $R_{ym}$. Die Reflexion des unbeschriebenen, weißen CF-Blattes beträgt im allgemeinen 88 %.

II. Schnelltest auf Dichtigkeit

a) Eine Probe der Kapseldispersion wird mit Wasser auf ca. 20 % verdünnt und diese verdünnte Dispersion mit einem Haarpinsel in einem dünnen Strich auf eine mit Kieselgel 60 F 254 belegte DC-Alufolie (Fa. Merck) aufgestrichen. Nach dem Trocknen des Aufstrichs prüft man auf eine Verfärbung des Kieselgels unter dem Strich durch außensitzende Farbbildnerlösung und benotet die Verfärbung (Note 1 = farblos, weiß ...; Note 6 = tiefdunkel verfärbt).
b) Außensitzender Farbbildner kann durch Aufsetzen eines Tropfens Dodecylbenzol auf diesen Aufstrich nachgewiesen werden. Nach der Trocknung entsteht eine mehr oder weniger starke Verfärbung, die ebenso benotet wird.

Beispiel 1

1.1 In einem Vorratsbehälter $Z_1$ werden 80 Teile einer Farbbildnermischung, die nach Entwicklung einen schwarzen Farbton ergibt, in 1520 Teilen Diisopropylnaphthalin vorgelegt. Die 80 Teile Farbbildnermischung bestehen aus 11,43 Teilen 1-Methyl-3-dibutylamino-5-diethylamino-2,4-diazarhodaminlacton (rot), 25,71 Teilen 2,6-Diphenyl-4-(4'-dimethyl-aminophenyl)-pyridin (gelb), 28,57 Teilen 3'-Phenyl-7-N-diethyl-spirodibenzopyran (blau) und 14,28 Teilen N-Benzoylleukomethylenblau (blaugrün). In einem zweiten Vorratsbehälter $Z_2$ wird eine Lösung aus 320 Teilen einer 20 %igen Lösung einer Poly-2-acrylamido-2-methyl-propansulfonsäure (Natriumsalz, Viskosität der 20 %igen Lösung 800 mPas; K-Wert 124) in Wasser, 1000 Teilen Wasser und 32 Teilen 10 %iger Ameisensäure bereitet und in einem dritten Vorratsbehälter $Z_3$ werden 241 Teile eines in Wasser klar löslichen, partiell methylierten Vorkondensates (enthält ca. 2,3 $CH_3O$-Gruppen pro Melaminmolekül) aus 1 Mol Melamin und 5,25 Molen Formaldehyd in 1143 Teilen Wasser vorgelegt. Aus diesen Vorratsbehältern läßt man 38 Teile, 33 Teile und 33 Teile pro Minute, das entspricht insgesamt 6240 Teilen/Stunde, in einen Reaktor einlaufen, in dem alle 3 Zuläufe gemischt werden.
Die Temperatur im Reaktor (ca. 90 Volumenteile) wird auf ungefähr 64°C eingestellt. Die Mischung gelangt danach in das Dispergiergerät (21 Volumenteile), dessen Drehzahl so reguliert wird, daß Tröpfchen mit einem Durchmesser von 2 bis 5 µm entstehen. Im Reaktor beginnt das Vorkondensat bei einem pH-Wert von 4,4 weiter zu kondensieren und dieses Weiterkondensat stabilisiert die im Dispergiergerät durch Zerteilung der hydrophoben Phase erhaltene Emulsion in Form der Mikrokapseldispersion, die in gerührter Form stabil ist. Die Kapseldispersion wird in einem 2000 Volumenteile fassenden Kessel, der von außen auf 65°C erhitzt wird, unter Rühren angesammelt. Der pH-Wert der in den Rührkolben einlaufenden Dispersion beträgt pH = 4,4. Eine Dispersionsprobe, nach dem Dispergiergerät entnommen und nach Verdünnen auf 10 % gemäß IIa mit einem Haarpinsel auf eine als Entwickler dienende Kieselgel-Dünnschichtplatte gestrichen, ergibt noch einen deutlich gefärbten Strich, d.h. die Mikrokapselwände sind noch nicht ganz ausgehärtet bzw. dicht. Wenn der Kessel nach 14,5 min mit 1500 Volumenteilen gefüllt ist, wird der Kapseldispersionsstrom in einem weiteren Kessel gesammelt. 15 min. nach Ende des Zulaufs in den ersten Rührkolben zeigt ein Aufstrich der verdünnten Dispersion auf Kieselgel gemäß IIa keine Färbung mehr. Die Kapselwand ist dicht. Der Inhalt des Kessels wird dann 2 h bei 80°C gehalten, dabei kondensiert das Harz restlos aus. Die Dispersion mit einem pH-Wert von 5,0 wird mit Triethanolamin neutralisiert und abgekühlt.

Die Dispersion wird über ein Sieb mit 40 µm Maschenweite gesiebt. Dabei fallen 2 Teile feuchter Siebrückstand an. Die gesiebte Dispersion hat einen Feststoffgehalt von 38,2 % und eine Viskosität entsprechend der Auslaufzeit aus dem DIN-Becher von 22 sec. Die Mikrokapseln haben mikroskopisch beurteilt einen Durchmesser von 2 bis 5 µm. Gemessen im Coulter-Counter ergibt sich ein Durchmesser des häufigsten Teilchens von 3,2 µm (Zahlenmittel) und des häufigsten Volumens von 4,8 µm (Volumenmittel) bei einer Halbwertsbreite von HW = 3,6 µm (d.h. Durchmesser von 3,0-6,6 µm). Die Dispersion riecht etwas nach Formaldehyd.

Die erhaltene Mikrokapseldispersion wird nach I auf Dichtigkeit und Intensität der Durchschrift geprüft:

Die Dichtigkeitsprüfung nach Ia ergab einen ICF-Wert von 2 % und die Intensitätsprüfung nach Ib einen ID-Wert von 48 %.

1.2 200 Teile der nach 1.1 erhaltenen Dispersion werden mit Ammoniak schnell auf pH = 9,5 überneutralisiert. Nach 2-3 h stellt sich ein pH-Wert von 7,5 ein. Die Dispersion riecht nicht mehr nach Formaldehyd. Die Dichtigkeitsprüfung und die Intensitätsprüfung der Dispersion ergeben praktisch identische Werte mit der Dispersion nach 1.1.

1.3 200 Teile der nach 1.1 hergestellten Dispersion werden mit 7,0 Teilen Ethylenharnstoff, der vorher in 10,5 Teilen Wasser gelöst wurde, versetzt. Die Mischung wird 12 h gerührt. Danach ist der Geruch nach Formaldehyd verschwunden. Die Prüfung auf Dichtigkeit und Durchschriftintensität ergab praktisch identische Werte mit der Dispersion 1.1.

Beispiel 2

Es wird genau wie im Beispiel 1 gearbeitet aber mit folgender Ausnahme, die Zugabe der 3 Zuläufe wird ohne Änderung der relativen Mengen insgesamt auf 7920 Volumenteile/Stunde erhöht. Im Reaktor herrscht eine Temperatur von 65°C und am Auslauf des Dispergierapparates ein pH von 4,4. Die Temperatur im diskontinuierlich betriebenen Auskondensationskessel beträgt 66°C. 13 min nach Füllung des Rührbehälters sind die Kapseln nach Aufstrich einer verdünnten (10 %) Dispersion auf Kieselgel (nach IIa) dicht. Sie werden in 3 h bei 66°C unter Rühren auskondensiert. Die anfallende Dispersion hat einen pH = 5,0, sie wird mit Triethanolamin neutralisiert und abgekühlt.

Die erhaltene Dispersion hat einen Festgehalt von 40,7 %, eine Viskosität entsprechend einer Auslaufzeit im DIN-Becher von 25,1 sec. Über ein Sieb mit 40 µm-Maschenweite ergab sie einen feuchten Rückstand von 5 Teilen.

Der Kapseldurchmesser laut mikroskopischer Beobachtung beträgt 2-5 µm, im Coulter-Counter gemessen ergeben sich 3,0 µm als Zahlen- und 4,5 µm als Gewichtsmittel, letzteres mit einer Halbwertsbreite von 3,9-7,7 µm.

Die Dichtigkeitsprüfung nach Ia ergab einen ICF-Wert von 2 % und eine Durchschriftintensität nach Ib von ID = 45 %.

Beispiel 3

Beispiel 1 wurde mit einem Gesamtzulauf von 10 500 Volumenteile/Std. und einer Temperatur im Vorreaktor von 65°C wiederholt. Die diskontinuierliche Auskondensation wurde bei 70°C vorgenommen. Die zulaufende Dispersion hatte einen pH = 4,4. 13 min nach Füllung des Rührkessels waren die Kapseln nach einem Aufstrich auf Kieselgel dicht. Die Dispersion wurde noch 2,4 h bei gleicher Temperatur weitergerührt und die Kapselwände wurden dabei vollständig auskondensiert. Der pH-Wert stieg auf 4,9 an. Die Dispersion wurde dann mit Triethanolamin auf pH = 7,5 neutralisiert und abgekühlt.

Nach dem Sieben über das Sieb mit 40 µm Maschenweite, es blieben 3 Teile feuchter Rückstand auf dem Sieb zurück, hat die Kapseldispersion einen Feststoffgehalt von 38,9 % und eine DIN-Becher-Auslaufzeit von 22,5 sec. Die Kapseln haben mikroskopisch betrachtet einen Durchmesser von 2 bis 6 μm, der Coulter-Counter mißt 3,1 μm als Zahlenmittel und 4,9 μm als Volumenmittel, bei einer Halbwertsbreite von 3,1-8,6 μm.

Die Dichtigkeitsprüfung nach Ia ergab einen ICF-Wert von 1 % und eine Durchschriftintensität nach Ib von ID = 47 %.

Beispiel 4 und 5

In den beiden Beispielen wird der pH-Wert gegenüber den Beispielen 1-3 durch Zugabe von nur 14 Teilen 10 %iger Ameisensäure zum Schutzkolloidzulauf auf pH = 5,0 angehoben. Im Beispiel 4 werden insgesamt 5300 Volumenteile/h, im Beispiel 5 9400 Volumenteile/h Zulauf gefahren. Die Temperatur im Reaktor war für Beispiel 4 80°C, im Beispiel 5 75°C. Im Beispiel 4 waren die Kapseln 48 min nach Zulaufende dicht, im Beispiel 5 waren sie nach 28 min noch nicht ganz dicht. Beide Dispersionen wurden bei 78°C bzw. 71°C in 2 h unter Rühren ausgehärtet. Es ergaben sich folgende Werte:

Tabelle 1

| | Beispiel 4 | Beispiel 5 |
|---|---|---|
| Siebrückstand, Teile 40 μm Maschenweite | 2 | 1 |
| Festgehalt | 41,2 % | 42 % |
| Teilchendurchmesser | | |
| Mikroskop | 2–5 μm | 3–15 μm |
| Zahlenmittel | 3,2 μm | 3,4 μm |
| Volumenmittel | 4,4 μm | 10,7 μm |
| Halbwertsbreite | 3,0–6,2 μm | 7,3–13,7 μm |
| ICF | 2 % | 1 % |
| IG | 49 % | 55 % |

Beispiel 6, 7 und 8

Die Dispersionen gemäß Beispiel 6, 7 und 8 wurden gemäß Beispiel 1 hergestellt, jedoch wurde die Drehzahl des Dispergiergerätes variiert, um verschiedene Kapseldurchmesser einzustellen. Die Unterschiede in den Herstellungsbedingungen und in den Ergebnissen sind der folgenden Tabelle 2 zu entnehmen.

Tabelle 2

| | Beispiel 6 | Beispiel 7 | Beispiel 8 |
|---|---|---|---|
| Ameisensäure – Menge, Teile | 2,0 | 2,0 | 2,0 |
| pH-Wert – Eingang | 4,6 | 4,6 | 4,6 |
| Drehzahl (Upm) | 6000 | 5000 | 4000 |
| Gesamtdurchsatz Teile/h | 5300 | 5300 | 5300 |
| Temperatur °C – Reaktor | 70 | 69 | 70 |
| pH vor Auskondensation | 4,7 | 4,6 | 4,6 |
| Temp. bei Auskondensation °C | 70 | 70 | 68 |
| Ergebnis: | | | |
| Siebrückstand, feucht, Teile | 3 | 1 | 1 |
| DIN-Becher sec | 30,0 | 35,1 | 33,3 |
| Festgehalt % | 39,7 | 43,0 | 42,8 |
| Teilchendurchmesser μm | | | |
| Mikroskop | 2–5 | 2–6 | 3–8 |
| Zahlenmittel | 3,5 | 3,7 | 5,3 |
| Volumenmittel | 4,7 | 5,5 | 7,8 |
| Halbwertsbreite | 3,2–6,5 | 3,7–8,1 | 5,3–10,8 |
| IGF % | 1 | 3 | 2 |
| IG % | 49 | 52 | 54 |

Beispiel 9

Man verfährt wie im Beispiel 1 beschrieben, und verwendet in $Z_1$ 1600 Teile der Farbbildnerlösung gemäß Beispiel 1, in $Z_2$ eine Lösung aus 400 Teilen der 20 %igen Lösung der Poly-2-acrylamido-2-methyl-propansulfonsäure (Natriumsalz) gemäß Beispiel 1, 1176 Teilen Wasser und 10 Teilen einer 10 %igen Ameisensäure und in $Z_3$ eine Lösung aus 64,4 Teilen eines Vorkondensates aus 1 Mol Melamin und 3,9 Mol Formaldehyd, dessen Methylolgruppen mit ca. 2,4 Mol Methanol verethert sind, in 828 Teilen Wasser. Die drei Zuläufe werden auf 32 Teile, 28 Teile und 16 Teile pro Minute, das entspricht insgesamt 4560 Teilen pro Stunde, einreguliert und im Reaktor unter Rühren auf 70°C erhitzt, wobei sich ein pH von 5.1 einstellt. Die Mischung gelangt dann in den Dispergierapparat, wo die hydrophobe Farbbildnerlösung auf die Kapselgröße von 3 bis 7 μm zerteilt wird und die Teilchen mit dem weiterkondensierten Vorkondensat umhüllt werden. Das Dispergiergerät verläßt eine unter Rühren stabile Mikrokapseldispersion mit Kapseldurchmessern von 3-7 μm und einem pH = 5,15 bei 70°C. 1500 Teile der Dispersion werden in einem diskontinuierlichen Rührwerk mit Propellerrührer, der sich mit 1500 Umdrehungen/min dreht, bei 70°C angesammelt, dann wird innerhalb einer Minute nochmals eine Lösung von 57,4 Teilen des oben genannten Melamin-Formaldehyd-Vorkondensats in 75 Teilen Wasser hinzugegeben, wobei der pH-Wert auf 5,5 ansteigt. Die Dispersion wird bei 70°C gerührt. Nach 2 Stunden ist die Dichtigkeit der Kapseln erreicht. Ein dünner Aufstrich einer 1:1-Verdünnung mit Wasser ergibt, auf eine Kieselgel-Dünnschichtchromatographie-Platte gestrichen, keine Verfärbung des Kieselgels mehr. Die Dispersion wird noch 1,5 Stunden bei der gleichen Temperatur gehalten und gerührt, d.h. das Kondensat wird auskondensiert, sodann neutralisiert und abgekühlt.

Die entstandene Dispersion hat eine Viskosität entsprechend einer Auslaufzeit von 35,6 sec, einen Feststoffgehalt von 38,2 % nach dem Sieben, das 2 Teile feuchten Siebrückstand ergab. Der Kapseldurchmesser ist unverändert 3-7 μm, gemäß mikroskopischer Beurteilung.

Die Dichtigkeitsprüfung nach Ia ergab einen ICF-Wert von 2 % und die schwarze Durchschrift nach Ib hatte eine Intensität von ID = 50 %.

Vergleichsbeispiel

Es wird wie im Beispiel 1 aber mit folgenden Unterschieden gearbeitet:

In $Z_1$ werden 530 Teile der Farbbildnerlösung aus Beispiel 1, in $Z_2$ eine Lösung aus 106 Teilen einer 20 %igen von Polyacrylsäure-Natriumsalz (Viskosität der 20 %igen Lösung von 1348 mPas, K-Wert: 133,5, pH = 7,0), 658 Teilen Wasser und 30 Teilen einer 10 %igen Ameisensäurelösung und in $Z_3$ eine Lösung von 152 Teilen des in Beispiel 1 benutzten Melamin-Formaldehyd-Vorkondensates und 612 Teile Wasser vorgelegt. Die Zuläufe werden mit 23, 33 und 33 Teilen pro Minute in den Reaktor dosiert, das entspricht 5340 Volumenteilen pro Stunde.

Die Reaktortemperatur beträgt 60°C, der pH-Wert ist 4,8. Aus der Dispergierstufe (6000 Upm) erhält man eine Dispersion mit Primärkapseln, die 2-4 μm Durchmesser haben. Die Kapseln sind zum allergrößten Teil zu Agglomeraten bis 20 μm agglomeriert. 1000 Teile der viskosen Dispersion werden in einem Rührkolben mit Ankerrührer angesammelt und das Wandmaterial in 3 h bei 78°C und pH = 5,4 ausgehärtet.

Die so ausgehärtete Dispersion besteht fast nur aus Kapselagglomeraten, der Feststoffgehalt beträgt 26,9 %, die Viskosität entsprechend DIN-Becher-Auslaufzeit 41 sec. Der Schnelltest nach IIa und b liefert die Noten 5 und 6. Die Kapseln sind nicht dicht, Farbbildner und Lösung sind außerhalb der Kapseln.

Nach ca. 1/2 Stunde Betriebszeit beginnen sich im Reaktor größere Klumpen aus Agglomeraten zu bilden. Nach einer weiteren Stunde mußte die Apparatur abgestellt werden.

Der Vergleichsversuch 1 zeigt, daß das vorliegende Verfahren für die Mikroverkapselung mit Melamin-Formaldehyd-Vorkondensaten in Gegenwart von wasserlöslichen, schwache Säuregruppen tragenden Polymeren als Schutzkolloiden nicht geeignet ist. In der turbulenten Strömung der hier vorliegenden Verfahrensstufen entstehen die bereits in der EP-A 82 635 beschriebenen Agglomerate.

Vergleichsbeispiel 2

Es wird wie im Vergleichsbeispiel 1 gearbeitet, aber mit folgenden Abänderungen: In $Z_1$ werden 1040 Teile der Farbbildnerlösung aus Beispiel 1, in $Z_2$ eine Lösung aus 36 Teilen Polyacrylsäure-Na-Salz (K-Wert 20-30, Molekulargewicht 70 000 - 90 000), 101,3 Teilen eines Polyacrylsäure-Na-Salzes (K-Wert 10-14, Molekulargewicht ca. 5000), 35 Teile einer 10 %igen Ameisensäure und 870,7 Teilen Wasser und in $Z_3$ eine Lösung aus 229 Teilen des Melamin-Formaldehyd-Vorkondensates aus Beispiel 1 in 879 Teilen Wasser vorgelegt. Die Zuläufe werden mit 30, 25 und 25 Teilen/min in den Reaktor eingebracht. Damit werden insgesamt 5000 Teile pro Stunde Produkt der kontinuierlichen Verkapselung zugeführt. Die Temperatur und der pH-Wert unterscheiden sich nicht von dem des Vergleichsbeispiel 1.

Nach ca. 30 min beginnt in der Reaktorstufe die Dispersion auszuflocken. Aus der Dispergierstufe tritt eine agglomerierte, flockige Dispersion aus. Der Versuch wurde abgebrochen, da keine Einzelkapseln zu erhalten waren.

Die Kombination der zwei Polyacrylsäuren dieses Vergleichsbeispiels entspricht nach Menge und Molekulargewicht den Ethylen-Acrylsäure-Copolymeren der EP-A 82 635 im veröffentlichten Beispiel.

Das Vergleichsbeispiel zeigt, daß die in der EP-A 82 635 beschriebenen Einsatzstoffe erfindungsgemäß nicht verwendbar sind.

Beispiel 10

Man verwendet eine Apparatur gemäß Beispiel 1 mit der Änderung, daß die aus der Dispergierstufe austretende Kapseldispersion kontinuierlich eine Kesselkaskade durchläuft. Sie tritt nacheinander zuerst in drei je 1000 Volumenteile fassende, gerührte Kessel jeweils von unten ein und oben über einen Überlauf aus. Danach durchläuft sie einen gerührten Kessel von 4000 Volumenteilen Inhalt und nochmals einen von 1000 Volumenteilen Inhalt. Die ersten vier Kessel sind auf 69°C erhitzt, der letzte dient zur Kühlung der ausgehärteten Kapseldispersion.

Es werden in $Z_1$ 6900 Teile der in Beispiel 1 benutzten Farbbildnerlösung, in $Z_2$ eine Lösung aus 1920 Teilen einer 20,1 %igen Lösung eines Poly-(3-sulfopropyl)methacrylsäureester als Kaliumsalz (Viskosität der 20 %igen Lösung bei Raumtemperatur 725 mPas; K-Wert 138,9) in Wasser, 6000 Teilen Wasser und 20 Teilen Ameisensäure (100 %ig) und in $Z_3$ eine Lösung aus 2064 Teilen des in Beispiel 1 benutzten Melamin-Formaldehyd-Vorkondensates in 6240 Teilen Wasser vorgelegt. Die drei Zuläufe werden auf 32, 28 und 28 Volumenteilen pro Minute eingestellt, das sind insgesamt 5280 Teile pro Stunde, und der Weiterkonensation und Dispergierung zugeführt. Die Temperatur im Reaktor und in der Dispergierstufe beträgt 69°C. Die in die Kesselkaskade eintretende Kapseldispersion hat einen pH-Wert von 4,7. Die nach insgesamt 1,5 Stunden aus der Kesselkaskade austretende Kapseldispersion hat einen pH-Wert von 5,3 und wird mit Triethanolamin neutralisiert.

Die Dispersion hat einen Feststoffgehalt von 39,0 % und eine Viskosität im DIN-Becher entsprechend einer Auslaufzeit von 45 sec. Die Mikrokapseln haben mikroskopisch beurteilt einen Durchmesser von 2-5 µm. Im Coulter-Counter gemessen, ergibt sich ein Durchmesser des häufigsten Volumens von 5,5 µm bei einer Halbwertsbreite von HW = 3,1 µm.

Im Schnelltest auf Dichtigkeit wird nach IIa die Note 1-2 (fast farblos), nach IIb die Note 1-2 (fast farblos) erzielt.

Die Dichtigkeit nach Ia beträgt ICF = 6 %, die Intensität der schwarzen Durchschrift ID = 49 %.

Beispiel 11

Im Vorratsbehälter Z1 werden 9600 Teile der Farbbildnerlösung von Beispiel 1 vorgelegt. Im Vorratsbehälter Z2 wird eine Lösung aus 1920 Teilen einer 20 %igen Lösung eines Poly-2-acrylamido-2-methylpropansulfonsäure-Natriumsalzes gemäß Beispiel 1, 6000 Teile Wasser und 70 Teile 100 %iger Ameisensäure und im Vorratsbehälter Z3 eine Lösung aus 1445 Teilen des in Wasser klarlöslichen, partiell methylierten Melamin-Formaldehyd-Vorkondensates gemäß Beispiel 1 und 6859 Wasser vorgelegt. Aus den Vorratsbehältern Z2 und Z3 fährt man mit einer Geschwindigkeit von je 14 ml/min die Lösungen in den Vorreaktor (310 ml Volumen). Im Vorreaktor wird gerührt und die Füllung auf 35°C temperiert. Der pH-Wert der Mischung beträgt pH = 3,8. Wenn der Vorreaktor gefüllt ist, fördert man zuerst solange die entsprechende Dispersion in einen Abfallbehälter, bis sich die Trübung bzw. die Lichtdurchlässigkeit der Reaktorfüllung auf 95 % stabilisiert hat. Sodann dosiert man das den Reaktor verlassende Gemisch zusammen mit 16 ml/min der Farbbildnermischung aus Z1 direkt in das Dispergiergerät. Die Drehzahl des Reaktors des Dispergiergerätes wird so eingestellt, daß eine Kapseldispersion mit Kapseln von 3 bis 10 µm Durchmesser (mikroskopisch beurteilt) entsteht. Die den Dispergator verlassende Kapseldispersion wird entsprechend Beispiel 10 durch drei je 1000 ml fassende Rührkessel geleitet und auf 80°C gehalten. Danach zeigt die Dispersion einen pH-Wert von pH = 3,8. Sie wird gekühlt und mit Triethanolamin auf pH = 7.5 neutralisiert.

500 Teile der Dispersion werden über ein Sieb mit 40 µm Maschenweite gesiebt. Dabei fallen 2 g eines feuchten Rückstandes an. Der Feststoffgehalt der Dispersion beträgt danach 40,1 %, die Auslaufzeit aus dem DIN-Becher 19,5 sec. Mikroskopisch beurteilt mißt der Kapseldurchmesser 3 bis 10 µm.

Die Dichtigkeitsprüfung nach Ia ergibt einen ICF-Wert von 4 % und die Intensitätsprüfung nach Ib einen ID-Wert von 51 %.

**Patentansprüche**

1.  Kontinuierliches Verfahren zur Herstellung von Mikrokapseln mit Kapselwänden aus Melamin-Formaldehyd-Kondensaten in wäßriger Dispersion, ausgehend von entsprechenden wasserlöslichen Melamin-Formaldehyd-Vorkondensate in Gegenwart von sulfon saure Gruppen enthaltenden wasserlöslichen Hochpolymeren, dadurch gekennzeichnet, daß man in einem gerührten Kontinuierlich durchströmten Reaktor mit auschließendem Dispergiergerät entweder

    1) das wasserlösliche Vorkondensat, das einzukapselnde hydrophobe Material und die wäßrige Lösung des sulfon saure Gruppen enthaltenden Hochpolymeren kontinuierlich mischt,

    2) in diesem Gemisch das wasserlösliche Vorkondensat bei pH 3,0 bis 6,5 bis zur beginnenden Trübung weiterkondensiert,

    3) das hydrophobe Material in der entstandenen wäßrigen Dispersion kontinuierlich dispergiert, wobei die feinen Tröpfchen des hydrophoben Materials von dem aus dem Vorkondensat entstehenden wasserunlöslichen Kondensaten umhüllt werden, oder

    1a) das wasserlösliche Vorkondensat und die wäßrige Lösung des sulfon saure Gruppen enthaltenden Hochpolymeren kontinuierlich mischt,

    2a) in dem Gemisch das wasserlösliche Vorkondensat bei pH 3,0 bis 6,5 bis zur beginnenden Trübung weiterkondensiert, dann

    3a) das hydrophobe Material in der entstandenen wäßrigen Dirpersion kontinuierlich dispergiert, wobei die feinen Tröpfchen des hydrophoben Materials von dem aus Vorkondensat entstehenden wasserunlöslichen Kondensat umhüllt werden,

    und dann

    4) das Wandmaterial der entstandenen Mikrokapseln auskondensiert.

2.  Verfahren gemäß Anspruch 1, dadurch gekennzeichnet, daß man als wasserlösliche Melamin-Formaldehyd-Vorkondensate Umsetzungsprodukte von Melamin mit Formaldehyd im Molverhältnis 1:3 bis 1:6 verwendet, wobei die Umsetzungsprodukte gegebenenfalls mit Alkanolen, vorzugsweise mit Methanol, verethert sind.

3.  Verfahren gemäß Anspruch 1 oder 2, dadurch gekennzeichnet, daß als stark saure Gruppen enthaltende wasserlösliche Hochpolymere sulfonsäuregruppenhaltige Homo- oder Copolymere des Sulfoethyl-(meth)acrylats, Sulfopropyl(meth)acrylats, der Maleinimid-N-ethanolsulfonsäure oder 2-Acrylamido-2-methylpropansulfonsäure verwendet werden.

4.  Verfahren gemäß Anspruch 3, dadurch gekennzeichnet, daß als stark saure Gruppen enthaltendes wasserlösliches Hochpolymeres ein Homo- oder Copolymerisat der 2-Acrylamido-2-methylpropansulfonsäure verwendet wird.

5.  Verfahren gemäß Anspruch 1, 3 oder 4, dadurch gekennzeichnet, daß das stark saure Gruppen enthaltende Hochpolymere einen K-Wert von 100 bis 170, oder eine Viskosität von 200 bis 5000 mPas (gemessen bei 25°C in 20 gew.%iger Lösung und einem Schergefälle von 489 s$^{-1}$) aufweist.

6.  Verfahren gemäß den Ansprüchen 1 bis 5, dadurch gekennzeichnet, daß man die Mikrokapselherstellung bei Temperaturen von 15 bis 100°C vornimmt.

7.  Verfahren gemäß den Ansprüchen 1 bis 6, dadurch gekennzeichnet, daß das hydrophobe zu verkapselnde Material bereits bei der Weiterkondensation der wasserlöslichen Vorkondensate zugegen ist.

**Claims**

1.  A continuous process for preparing microcapsules having melamine-formaldehyde condensate capsule walls in aqueous dispersion starting from appropriate water-soluble melamine-formaldehyde precondensates in the presence of water-soluble high polymers containing sulfonic acid groups, which comprises in stirred continuous flow-through reactor with a downstream disperser either

    1) continuously mixing the water-soluble precondensate, the hydrophobic material to be encapsulated and the aqueous solution of the high polymer containing sulfonic acid groups,

    2) further condensing the water-soluble precondensate in this mixture at pH 3.0-6.5 until the solution starts to become cloudy,

3) continuously dispersing the hydrophobic material in the aqueous dispersion formed, the fine droplets of the hydrophobic material being enveloped by the water-insoluble condensate resulting from the precondensate,

or

1a) continuously mixing the water-soluble precondensate and the aqueous solution of the high polymer containing sulfonic acid groups,

2a) further condensing the water-soluble precondensate in the mixture at pH 3.0-6.5 until the solution starts to become cloudy, then

3a) continuously dispersing the hydrophobic material in the aqueous dispersion formed, the fine droplets of the hydrophobic material being enveloped by the water-insoluble condensate resulting from the precondensate,

and then

4) condensing the wall material of the resulting microcapsules to completion.

2. A process as claimed in claim 1, wherein the water-soluble melamine-formaldehyde precondensate is a reaction product of melamine with formaldehyde in a molar ratio of from 1:3 to 1:6 which may have been etherified with an alkanol, preferably methanol.

3. A process as claimed in claim 1 or 2, wherein the water-soluble high polymer containing sulfonic acid groups is a sulfo-containing homopolymer or copolymer of sulfoethyl (meth)acrylate, of sulfopropyl (meth)acrylate, of maleimide-N-ethanesulfonic acid or of 2-acrylamido-2-methylpropanesulfonic acid.

4. A process as claimed in claim 3, wherein the water-soluble high polymer containing sulfonic acid groups is a homopolymer or copolymer of 2-acrylamido-2-methylpropanesulfonic acid.

5. A process as claimed in claim 1, 3 or 4, wherein the high polymer containing sulfonic acid groups has a K value of from 100 to 170, or a viscosity of from 200 to 5000 mPas (measured at 25°C in a 20% strength by weight solution at a shear gradient of 489 s$^{-1}$).

6. A process as claimed in any of claims 1 to 5, wherein the microcapsules are prepared at 15-100°C.

7. A process as claimed in any of claims 1 to 6, wherein the hydrophobic material to be encapsulated is already present during the further condensation of the water-soluble precondensate.


**Revendications**

1. Procédé continu de préparation de microcapsules, dont les parois sont faites en produits de condensation mélamine/formaldéhyde, en dispersion aqueuse, à partir des pré-condensats mélamine/formaldéhyde hydrosolubles correspondants en présence de hauts polymères hydrosolubles contenant des groupements acide sulfonique, caractérisé en ce que, dans un réacteur agité traversé par un écoulement continu avec un disperseur exclusif, soit

1) on mélange en continu le pré-condensat hydrosoluble, le matériau hydrophobe à encapsuler et la solution aqueuse du haut polymère contenant des groupements acide sulfonique,

2) dans ce mélange, on poursuit la condensation du pré-condensat hydrosoluble à un pH de 3,0 à 6,5 jusqu'au trouble commençant,

3) on disperse en continu le matériau hydrophobe dans la dispersion aqueuse formée, en enrobant ainsi les fines gouttelettes de matériau hydrophobe avec le condensat insoluble dans l'eau obtenu à partir du pré-condensat, soit

1a) on mélange en continu le pré-condensat hydrosoluble et la solution aqueuse de haut polymère contenant des groupements acide sulfonique,

2a) dans le mélange, on poursuit la condensation du pré-condensat hydrosoluble à un pH de 3,0 à 6,5 jusqu'au trouble commençant, puis

3a) on disperse en continu le matériau hydrophobe dans la dispersion de matériau hydrophobe avec le condensat insoluble dans l'eau obtenu à partir du pré-condensat,

et ensuite

4) on termine la condensation du matériau constituant la paroi de la microcapsule obtenue.

2. Procédé selon la revendication 1, caractérisé en ce qu'on utilise comme pré-condensats mélamine/formaldéhyde hydrosolubles les produits de réaction de la mélamine avec le formaldéhyde dans un rapport molaire de 1:3 à 1:6, les produits de réaction étant éventuellement éthérifiés par des alcanols, par exemple avec du méthanol.

3. Procédé selon la revendication 1 ou 2, caractérisé en ce qu'on utilise comme hauts polymères hydrosolubles contenant des groupements fortement acides des homo-ou copolymères à groupements acide sulfonique de (méth)acrylate de sulfoéthyle, de (méth)acrylate de sulfopropyle, d'acide maléimide-N-éthanesulfonique ou d'acide 2-acrylamido-2-méthylpropanesulfonique.

4. Procédé selon la revendication 3, caractérisé en ce qu'on utilise comme haut polymère hydrosoluble contenant des groupements fortement acides un homo-ou copolymère de l'acide 2-acrylamido-2-méthyl-propanesulfonique.

5. Procédé selon la revendication 1, 3 ou 4, caractérisé en ce que le haut polymère contenant des groupements fortement acides a une valeur K de 100 à 170 ou une viscosité de 200 à 5000 mPa.s (mesurée à 25°C en solution à 20% en poids et avec un gradient de cisaillement de 489 s$^{-1}$).

6. Procédé selon les revendications 1 à 5, caractérisé en ce qu'on effectue la préparation des microcapsules à des températures de 15 à 100°C.

7. Procédé selon les revendications 1 à 6, caractérisé en ce que le matériau hydrophobe à encapsuler est déjà présent lors de la poursuite de la condensation du pré-condensat hydrosoluble.